# EUROPÄISCHE PATENTSCHRIFT

(11) **EP 1 603 764 B1**
(45) Veröffentlichungstag und Bekanntmachung des Hinweises auf die Patenterteilung: **17.03.2010**
(21) Anmeldenummer: 04710026.8
(22) Anmeldetag: 11.02.2004
(51) Int. Cl.: B60J 10/04

(54) **DICHTUNGSLEISTE FÜR DIE RAHMENSTRUKTUR EINES FAHRZEUGS**
SEALING STRIP FOR A VEHICLE FRAME STRUCTURE
BAGUETTE D'ETANCHEITE POUR STRUCTURE DE CADRE D'UN VEHICULE

(30) Priorität: 18.03.2003 DE 20304269 U
(43) Veröffentlichungstag der Anmeldung: 14.12.2005
(73) Patentinhaber: Meteor Gummiwerke K.H. Bädje GmbH & Co. KG, 31167 Bockenem (DE)
(72) Erfinder: MATTHIES, Ingolf, 38667 Bad Harzburg (DE)
(74) Vertreter: Sobisch, Peter
(86) Internationale Anmeldenummer: PCT/EP2004/001250
(87) Internationale Veröffentlichungsnummer: WO 2004/082975

(56) Entgegenhaltungen:
- EP-A- 0 524 447
- WO-A-00/03885
- DE-A- 19 531 600
- FR-A- 2 743 028
- GB-A- 373 477

## Beschreibung

Die Erfindung bezieht sich auf eine Dichtungsleiste entsprechend dem Oberbegriff des Anspruchs 1.

Derartige Dichtungsleisten sind zum Zusammenwirken mit der, zwischen einer Öffnungs- und einer Schließstellung bewegbaren Scheibe der Fensteröffnung eines Fahrzeugs bestimmt. Sie werden im Bereich der C-Säulen, jedoch auch der Dachrahmen von Faltverdecken, Hardtops und zurückziehbaren Hardtops eingesetzt. Die Dichtungselemente gelangen nach Maßgabe des Öffnungszustands der Scheibe mehr oder weniger in eine dichtende Anlage mit deren Randbereichen.

Regelmäßig sind die Dichtungselemente dahingehend ausgebildet, dass sich beiderseits der Scheibe Dichtungslippen befinden, die nach Maßgabe einer definierten Vorspannung an der Scheibe anliegen. Diese Vorspannung ist dahingehend bemessen, dass zwar eine ausreichende Dichtungskraft gegeben ist, dass jedoch der unvermeidbare Verschleiß in Grenzen gehalten ist.

Bei dem Konzept der Schwenkbewegung der Scheibe zwischen der Öffnungs- und der Schließstellung müssen Randbedingungen beachtet werden, die durch die Gestalt des innerhalb der Türkonstruktion zur Verfügung stehenden Raumes bedingt sind. Dieser wird häufig durch den Radkasten beschränkt, so dass eine einfache Vertikalbewegung der Scheibe häufig nicht möglich ist und eine diesen räumlichen Beschränkungen angepasste Schwenkbewegung eingerichtet werden muss. Diesem Umstand muss auch bei der Auslegung der Dichtungsleiste Rechnung getragen werden, nämlich mit dem Ziel, eine beidseitige gleichförmige Überdeckung der Scheibe durch die Dichtungslippen zu sichern, und zwar in Abhängigkeit von dem Öffnungszustand der Scheibe entlang der konstruktiv festgelegten Schwenkkurve.

Eine weitere Randbedingung für die Dichtungsleiste ergibt sich aus der durch das jeweilige Fahrzeug definierten räumlichen Krümmung der Fensterberandung.

Im Hause der Anmelderin sind einstückige Dichtungsleisten bekannt, die einen im Querschnitt global U-förmigen Aufbau zeigen und über einen mittleren Basisabschnitt an der Rahmenstruktur eines Fahrzeug, hier einer Fenstereinfassung befestigbar sind. Diese Dichtungsleisten gelangen in dieser Form, dass heißt als Fertigprodukt zur Fahrzeugmontage. Infolge der genannten, für die Scheibe einzurichtenden Schwenkkurve weist dieser Raum - entlang der Dichtungsleiste gesehen - unterschiedliche Tiefenabmessungen auf, so dass sich die Durchführung von Nachbearbeitungen von Funktionsflächen, die regelmäßig innerhalb dieses Raumes angeordnet sind, aufgrund deren schlechter Zugänglichkeit häufig sehr schwierig gestaltet. Dies kann in Einzelfällen zu Qualitätsminderungen und sogar zu Mängeln bei den Enderzeugnissen führen.

Aus der Fundstelle WO 00/0385 A ist eine zur Montage an der Rahmenstruktur eines Fahrzeugs eingerichtete Dichtungsleiste bekannt, die zum Zusammenwirken mit einer verschwenkbaren Scheibe eines Fensters bestimmt ist und einen im Querschnitt global U-förmigen, zur Aufnahme der Scheibe eingerichteten Raum bildet. Die freien Enden der Querschnittsstruktur sind jeweils mit einer Dichtungslippe versehen, die zur randseitigen dichtenden Anlage an der Scheibe bestimmt ist. Die genannte Querschnittsstruktur ist aus zwei L-förmigen Teilen zusammengesetzt, deren Basisteile einander überdecken und deren Seitenteile die seitlichen Querschnittsbegrenzungen bilden. Die Basisteile sind formschlüssig relativ zueinander fixiert und stehen gleichzeitig über Verschraubungen fest mit der Rahmenstruktur des Fahrzeugs in Verbindung.

Aus der Fundstelle FR 2 743 028 A ist eine vergleichbare, einen U-förmigen Querschnitt aufweisende Dichtungsleiste bekannt, die global aus zwei, L-förmigen, aus thermoplastischem Kunststoff bestehenden Rahmenteilen zusammengesetzt ist, die gemeinsam ein Dichtungselement tragen, welches an seinen freien Enden Dichtungslippen bildet, die zur seitlichen Anlage an der Scheibe der Türe eines Kraftfahrzeugs bestimmt sind. Das Dichtungselement verbindet über einen mittleren membranförmigen Zwischenabschnitt die Basisabschnitte der Rahmenteile, wobei dieser Zwischenabschnitt mit der Maßgabe bemessen ist, dass die Rahmenteile im nicht monierten Zustand der Dichtungsleiste voneinander beabstandet sind. Der Einbauzustand dieser Dichtungsleiste ist jedoch dadurch gekennzeichnet, dass die beiden Rahmenteile über ihre Basisabschnitte, die komplementär nach Art einer Feder-Nut-Verbindung ausgebildet sind, fest miteinander verbunden werden, so dass sich der membranförmige Verbindungsabschnitt in den Innenraum des U-förmigen Querschnitts hinein wölbt und eine elastische Anlageleiste für eine in diesen Raum eingeführte Scheibe bildet.

Die aus der Fundstelle DE 195 31 600 A1 bekannte Dichtungsleiste ist durch eine einteilige, U-förmige Schiene gekennzeichnet, deren freie Enden mit Dichtungslippen in Verbindung stehen, die in den U-förmigen Querschnittsraum hineinragen und zur dichtenden Anlage an der Scheibe der Türe eines Kraftfahrzeugs bestimmt sind. Die Befestigung der genannten Schiene erfolgt über eine Verschraubung des einen der beiden Schenkel mit einer flanschartigen Rahmenstruktur des Fahrzeugs, wobei die Verschraubung mit der Maßgabe angelegt ist, dass eine Verstellung in Fahrzeughöhen und -längsrichtung möglich ist.

Sämtliche dieser bekannten Dichtungsleisten sind dadurch gekennzeichnet, dass die Abmessungen der U-förmigen Aufnahmestruktur für die Scheibe faktisch konstruktiv vorgegeben und nicht justierbar ist. Dies bedeutet, dass dementsprechend die Anpresskraft der Dichtungselemente bzw. der Dichtungslippen durch deren Bemessung, deren Gestaltung und deren Werkstoff ebenfalls festgelegt ist. Sollte die sich ergebende Anpresskraft jedoch unangemessen sein bzw. ungleichförmig, stehen bei diesen Ausführungsformen keine kostenmäßig einfach durchzuführenden Korrekturmaßnahmen zur Verfügung.

Ein Bedürfnis zur Variierung des Anpressdruckes ergibt sich aus der sich abzeichnenden zukünftigen Verwendung solcher Fahrzeugwaschanlagen, bei denen auf rotierende oder translatorisch bewegte Bürstenanordnungen verzichtet wird und anstelle dieser Systeme Düsenanordnungen eingesetzt werden, aus denen eine Reinigungsflüssigkeit unter hohem Druck austritt. In einzelnen Fällen haben sich Dichtungsanordnungen im Fensterbereich als unzureichend erwiesen, um dem Druck der auftreffenden Reinigungsflüssigkeit zu widerstehen.

Es ist die Aufgabe der Erfindung, eine Dichtungsleiste der eingangs bezeichneten Gattung mit Hinblick auf ein qualitativ gleichförmig und reproduzierbar gutes Enderzeugnis sowie mit Hinblick auf nachträgliche Einstellungsänderungen hin auszugestalten. Gelöst ist diese Aufgabe bei einer solchen Dichtungsleiste durch die Merkmale des Kennzeichnungsteils des Anspruchs 1.

Erfindungswesentlich ist zunächst einmal, dass die beiden Formteile, die den im Querschnitt U-förmigen Raum der Dichtungsleiste umschließen, als voneinander getrennte Bauelemente vorliegen und somit in diesem getrennten Zustand zur Fahrzeugmontage gelangen. Arbeitsvorgänge, die nach der Formgebung der Formteile anfallen, können somit unbehindert durch die Gestalt der Dichtungsleiste ausgeführt werden, so dass sich die fertigungstechnischen Probleme, die mit der eingeschränkten Zugänglichkeit von Bearbeitungsflächen innerhalb des genannten Raumes und dessen - entlang der Dichtungsleiste gesehen - sich ändernder Tiefe zusammenhängen, gar nicht erst stellen. Beide Formteile können somit getrennt voneinander bis zum Zustand des Endprodukts bearbeitet werden. Dies eröffnet vorteilhafte Möglichkeiten zur Bereitstellung einer reproduzierbaren Produktqualität.

Erfindungswesentlich ist ferner, dass wenigstens eines der beiden Formteile - in einer Richtung senkrecht zu der Oberfläche der Scheibe gesehen - justierbar an der Rahmenstruktur bzw. einer Fenstereinfassung befestigt ist. Dies bedeutet, dass der Anpressdruck, unter dem die Dichtungslippen an der Scheibe stehen, durch Anpassung der Position wenigstens eines der Formteile veränderbar ist. Auf diesem Wege kann ein wie auch immer verursachter ungleichförmiger Anpressdruck beiderseits der Scheibe in einer gewünschten Weise verändert bzw. ausgeglichen werden. Darüber hinaus kann auch, soweit dies mit einer Begrenzung des Verschleißes sowie unter Umständen der Schwergängigkeit des Öffnungs- und des Schließvorgangs der Scheibe vereinbar ist, ein erhöhter Anpressdruck eingestellt werden, so dass Probleme mit Hochdruck-Autowaschanlagen zuverlässig vermieden werden.

Eine Bearbeitung von Funktionsflächen, z. B. Dichtungsflächen kann gemäß den Merkmalen des Anspruchs 2 in der Aufbringung von Beschichtungen beispielsweise in der Form von Gleitlack, Beflockungen usw. bestehen.

Die Dichtungsleiste weist entsprechend den Merkmalen des Anspruchs 3 eine räumlich gekrümmte Gestalt auf, wobei sich das Tiefenmaß des im Querschnitt U-förmigen Raumes von dem einen bis zu dem anderen Ende ändert. Die räumliche Krümmung sowie die Art der Veränderung des genannten Tiefenmaßes werden durch die Konstruktionsdaten des jeweiligen Fahrzeugs bestimmt.

Die Merkmale des Anspruchs 4 sind auf eine beispielhafte, jedoch einfach realisierbare Ausführungsform der Dichtungsleiste gerichtet. Zumindest das senkrecht zu der Scheibe justierbar angeordnete Formteil weist eine im Querschnitt L-förmige Gestaltung auf und besteht aus einem Basisteil und einem Seitenteil, wobei ersteres zur Befestigung an der Rahmenstruktur eingerichtet ist. Die Formteile sind unabhängig voneinander an der Rahmenstruktur montiert und stehen untereinander jedenfalls nicht unmittelbar in Verbindung.

Die Merkmale der Ansprüche 5 bis 8 sind auf eine weitere konstruktive sowie werkstoffliche Ausgestaltung der Dichtungsleiste gerichtet. Diese steht hiernach mit der Maßgabe mit der Rahmenstruktur in Verbindung, dass jedenfalls der durch die Dichtungsleiste umgrenzte Raum zuverlässig dichtend gegenüber dem Außenraum geschützt angeordnet ist. Die Formteile können hiernach aus einem Kunststoff, einem Metall, z.B. VA-Blech oder in dem einen Fall aus Kunststoff und in dem anderen Fall aus einem Metall bestehen. In Abhängigkeit von den Abmessungen und der Struktur der Formteile kann bei einer Herstellung aus Kunststoff über eine Anordnung von Versteifungsrippen eine Stabilitätsverbesserung in Betracht kommen.

Infolge der lösbaren Befestigung der Formteile an der Rahmenstruktur entsprechend den Merkmalen des Anspruchs 9 sind auch nachträgliche Eingriffe möglich, insbesondere Nachjustierungen der Dichtungslippen.

Die Formteile sind gemäß den Merkmalen des Anspruchs 10 in einer von dem jeweiligen Fahrzeug abhängigen Weise räumlich gekrümmt ausgebildet.

Die Erfindung wird im Folgenden unter Bezugnahme auf das in den beiliegenden Zeichnungen dargestellte Ausführungsbeispiel einer Dichtungsleiste näher erläutert werden. Es zeigen:
Fig. 1 eine perspektivische Ansicht eines erfindungsgemäßen Dichtungsleiste;

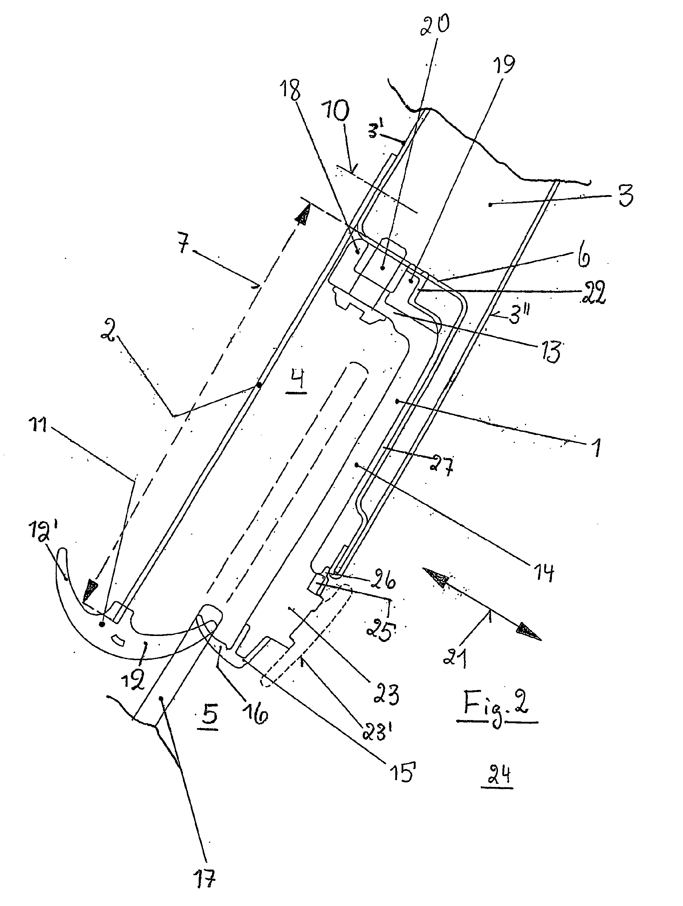

Fig. 2 eine Schnittdarstellung der Dichtungsleiste entsprechend einer Ebene II-II der Fig. 1;

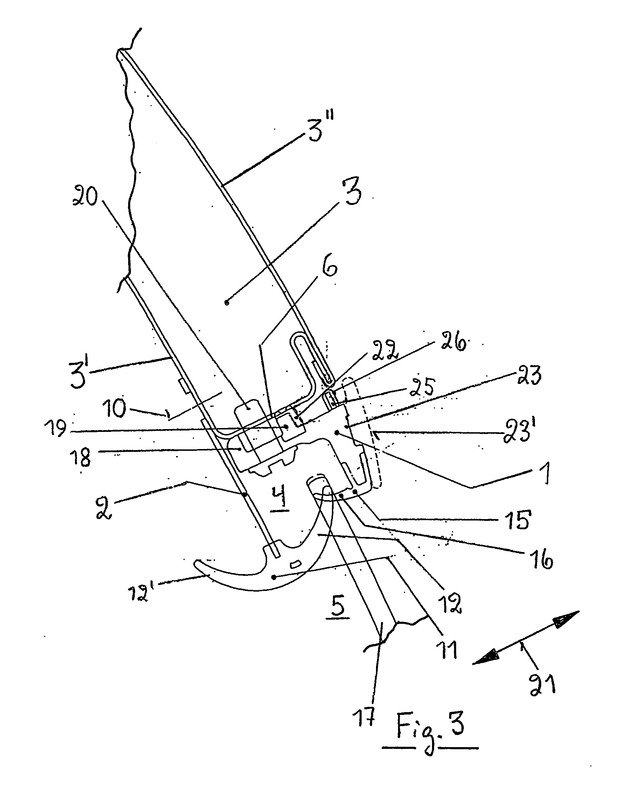

Fig. 3 eine Schnittdarstellung der Dichtungsleiste entsprechend einer Ebene III-III der Fig. 1.

Mit 1, 2 sind zwei Formteile bezeichnet, die zur Befestigung an einer Rahmenstruktur 3 der Fenstereinfassung eines Kraftfahrzeugs, hier im C-Säulenbereich bestimmt sind. Beide Teile stehen lösbar mit der Rahmenstruktur in Verbindung und umgrenzen in Verbindung mit ersterer einen im Querschnitt global U-förmigen Raum 4.

Die Formteile 1, 2 bestehen aus einem Kunststoff, z. B. einem glasfaserverstärkten PPE (Polyphenylenoxid) mit einem Faseranteil von beispielsweise 20%. Es kommen jedoch auch andere Kunststoffe in Betracht, soweit eine vergleichbare Festigkeit bei vergleichbarer Masse gegeben ist. Auch kann eines der Formteile oder können beide Formteile aus einem metallischen Werkstoff, z.B. VA-Blech bestehen.

Die doppelwandig ausgebildete, aus einer Innenwandung 3' und einer Außenwandung 3" bestehende Rahmenstruktur 3 umgrenzt eine Fensterausnehmung 5, wobei die Innenwandung 3' einen sich senkrecht zu den Ebenen dieser Wandungen erstreckenden Randabschnitt 6 aufweist, der an seinem, der Außenwandung 3" zugekehrten Ende mit dieser beispielsweise durch Falzung in Verbindung steht. Durch den Randabschnitt 6 ist die Rahmenstruktur 3 gegenüber der Fensterausnehmung 5 verschlossen.

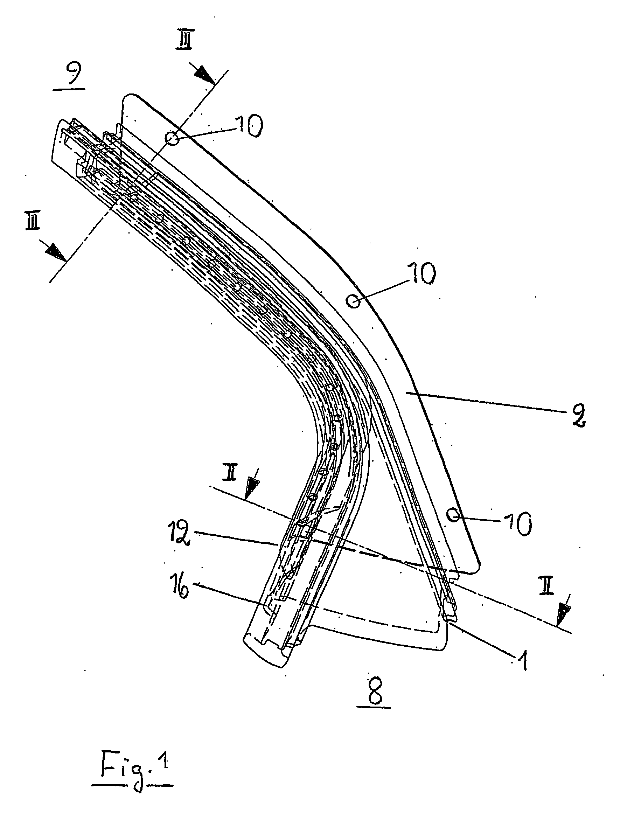

Wie Fig.1 erkennen lässt, weist die Tiefe des Raumes 4 nach Maßgabe eines Tiefenmaßes 7 einen sich von dem einen Ende 8 bis zu dem anderen Ende 9 der Dichtungsleiste stetig zunehmenden Verlauf auf. Dieses Tiefenmaß 7 beschreibt die Erstreckung des Formteils 1, 2 jeweils senkrecht zu dem Randabschnitt 6.

Das innenseitige Formteil 2 ist als ebener Steg ausgebildet, der sich parallel zu der Innenwandung 3' erstreckt und an dieser wie an der Stelle 10 angedeutet, beispielsweise durch Verschraubung gehalten ist. Es trägt an seinem, dem Randabschnitt 6 abgekehrten Ende ein Dichtungselement 11, an welchem eine, sich in den Raum 4 hineinerstreckende Dichtungslippe 12 angeformt ist. Die der Zeichnung ebenfalls entnehmbare, in den Innenraum des Fahrzeugs hineinragende Lippe 12' dient hauptsächlich dekorativen Zwecken.

Das außenseitige Formteil 1 weist eine global L-förmige Gestalt auf und besteht aus einem, zur Befestigung an dem Randabschnitt 6 bestimmten, sich im Wesentlichen parallel zu diesem erstreckenden Basisteil 13 und einem, sich im Wesentlichen senkrecht zu dem Basisteil 13 erstreckenden Seitenteil 14. Das Seitenteil 14 erstreckt sich außerdem parallel zu der Außenwandung 3" der Rahmenstruktur 3. Das Formteil 1 trägt an seinem, dem Randabschnitt 6 abgekehrten Ende ein Dichtungselement 15, an welchem wiederum eine Dichtungslippe 16 angeformt ist, die sich in den genannten Raum 4 hineinerstreckt.

Beide Dichtungslippen 12, 16 erstrecken sich innerhalb des Raumes aufeinander zu und sind dazu bestimmt, beiderseits einer Scheibe 17 nach Maßgabe einer definierten Anpresskraft an dieser anzuliegen und somit eine Dichtungsfunktion zu erfüllen. Die Scheibe 17 erstreckt sich parallel zu dem Formteil 2 sowie dem Seitenteil 14 des Formteils 1 in einem mittleren Bereich des Raumes 4. Sie dringt nach Maßgabe einer Öffnungs- oder einer Schließbewegung mehr oder weniger tief in diesen Raum 4 ein, wie durch die strichpunktierte Darstellung der Scheibe angedeutet ist.

Die Dichtungselemente 11, 15 bestehen zur Gänze aus einem Elastomer, z. B. EPDM (Ethylen/Propylen/Dien-Elastomer) oder auch TPE (thermoplastisches Elastomer). Sie werden beispielsweise durch Umspritzen der Enden der Formteile 1, 2 unter Verwendung eines Formwerkzeugs hergestellt, wobei die zu umspritzenden Abschnitte der Formteile vorab mit SBR (Styrol/Butadien-Elastomer) beschichtet werden.

Das Basisteil 13 ist durch zwei voneinander beabstandete und sich parallel zueinander in Längsrichtung der Dichtungsleiste erstreckende Stützrippen 18, 19 gekennzeichnet, zwischen denen sich - in Längsrichtung der Dichtungsleiste voneinander beabstandet - Befestigungsschrauben 20 befinden. Diese Befestigungsschrauben 20 durchdringen jeweils Bohrungen des Basisteils 13 sowie des Randabschnitts 6 und dienen der Befestigung des Formteils 1 an der Rahmenstruktur 3. Man erkennt, dass durch Variierung der Lage der zur Aufnahme einer Befestigungsschraube 20 in dem Basisteil 13 bestimmten Bohrung in einfacher Weise die Position des Formteils 1 senkrecht zur Ebene der Scheibe 17 bzw. zu dem Formteil 2 veränderbar ist, somit in Richtung der Pfeile 21. Praktisch dient die Anpassbarkeit der Ausrichtung der Position des Formteils 1 gegenüber der Rahmenstruktur 3. Die mechanische Vorspannung, unter der die Dichtungslippen 12, 16 bei einer Anlage an der Scheibe 17 stehen, kann durch Variierung der Position des Formteils 2 in Richtung der Pfeile 21 justiert werden, beispielsweise durch Unterlegscheiben, die mit den Schrauben an der Stelle 10 zusammenwirken.

Beispielsweise kann zur konstruktiven Realisierung einer Verstellmöglichkeit des Formteils 1 die zur Aufnahme der Befestigungsschraube 20 bestimmte Bohrung des Basisteils 13 ein Langloch sein, dessen Querschnitt sich in Richtung der Pfeile 21 erstreckt.

Der zur Anlage an dem Randabschnitt 6 bestimmte Teil der Stützrippe 19 ist mit einem Dichtungsprofil 22 bestehend aus einem Elastomer wie z. B. EPDM überzogen.

An dem, dem Dichtungselement 15 zugekehrten Ende des Formteils 1 befindet sich eine zur Außenseite 24 vorspringende Leiste 23, die - in Längsrichtung der Dichtungsleiste gesehen - eine gleichförmige Breite aufweist. Die Außenseite der Leiste 23 verläuft ungefähr fluchtend zu der Außenwandung 3". Die Leiste 23 steht unter Zwischenanordnung eines Ansatzes 25, der mit einem Dichtungsprofil 26 aus einem Elastomer überzogen ist, mit der zugekehrten Seite der Rahmenstruktur 3 in Verbindung, hier dem Verbindungspunkt der Innenwandung 3' mit der Außenwandung 3".

Die einstückig mit dem Seitenteil 14 geformte Leiste 23 ist als Träger einer Zierleiste 23' angelegt, die in den Zeichnungsfiguren 2 und 3 punktiert wiedergegeben ist. Sie bildet zur Außenseite hin den Abschluss der Außenwandung 3", die in dem gezeigten Ausführungsbeispiel die Dichtungsleiste außenseitig abdeckt, so dass sich außenseitig ein glattes Erscheinungsbild der Außenwandung 3" bis zu dem Dichtungselement 15 ergibt. Alternativ hierzu kann jedoch auch die Leiste 23 und damit das Formteil 1 mit der Maßgabe ausgebildet sein, dass sich ein vergleichbares äußeres Erscheinungsbild ergibt.

Beide Dichtungsprofile 22, 26 können in gleicher Weise wie die genannten Dichtungselemente 11, 15 durch Umspritzen entsprechender Strukturelemente der Formteile 1,2 in Verbindung mit einem Formwerkzeug hergestellt werden, wobei wiederum die zu umspritzenden Abschnitte vorab mit SBR beschichtet werden.

Infolge der beiden Dichtungsprofile 22, 26 ist der, zwischen der Außenseite des Seitenteils 14 einerseits und der Innenseite der Rahmenstruktur andererseits definierte Raum 27 und damit der Innenraum der Dichtungsleiste zuverlässig gegenüber der Außenseite 24 abgedichtet.

Die mit den jeweiligen Dichtungselementen 11, 16 ausgerüsteten Formteile 1, 2 gelangen einzeln zur Montage an einer Rahmenstruktur 3 und bilden somit erst im montierten Zustand eine funktionsfähige Dichtungsleiste. Unabhängig von der Tiefe des U-förmigen Raumes 4 können die Formteile 1, 2 einer Fertigbearbeitung unterzogen werden, welche z. B. in der Anbringung von Oberflächenbeschichtungen zumindest auf den, mit der Scheibe in Wechselwirkung tretenden Abschnitten der Dichtungslippen 12, 16 besteht. Lediglich beispielhaft sei eine Anbringung von Gleitlack, eine Beflockung usw. erwähnt. Diese Nachbearbeitungen können behinderungsfrei ausgeführt werden.

Bei der Montage der beiden Formteile 1, 2 kann der Anpressdruck der Dichtungslippen auf der Scheibe 17 und damit die Dichtungswirkung durch Nachjustieren der Position des Formteils 1 in Richtung der Pfeile 21 variiert werden. Dies ist erfindungsgemäß besonders einfach möglich, da die Befestigungsschraube 21 leicht zugänglich ist und diese Einstellarbeiten ohne großen Aufwand durchführbar sind. Praktisch wird jedoch stets ein Kompromiss zwischen einer größtmöglichen Dichtungswirkung einerseits und einem noch akzeptablen Verschleiß eingegangen werden müssen.

Man erkennt anhand der vorstehenden Ausführungen, dass das Konzept der erfindungsgemäßen Dichtungsleiste fertigungstechnische Vorteile mit sich bringt und darüber hinaus ein hohes Maß an Flexibilität bei der jederzeit gegebenen Möglichkeit einer Nachjustierung des Anpressdruckes der Dichtungslippen an der Scheibe.

## Patentansprüche

1. Zur Montage an einer Rahmenstruktur (3) eines Fahrzeugs eingerichtete Dichtungsleiste, die zum Zusammenwirken mit einer zwischen einer Öffnungs- und einer Schließstellung verschwenkbaren Scheibe (17) eines Fensters bestimmt ist, mit wenigstens einer Dichtungslippe (12,16), die nach Maßgabe der Schwenkposition der Scheibe (17) randseitig an dieser dichtend anliegt, bestehend aus getrennt voneinander hergestellten, zur Montage an der Rahmenstruktur (3) bestimmten, die wenigstens eine Dichtungslippe tragenden Formteile (1,2), die im montierten Zustand einen im Querschnitt global U-förmigen, zur Aufnahme der Scheibe (17) eingerichteten Raum (4) bilden, **dadurch gekennzeichnet, dass** die Formteile (1,2) im montierten Zustand nur über die Rahmenstruktur (3), nicht jedoch unmittelbar miteinander in Verbindung stehen und dass zumindest das eine der beiden Formteile (1, 2) in einer Richtung (21) senkrecht zu der Oberfläche der Scheibe (17) mit der Maßgabe justierbar an der Rahmenstruktur (3) befestigt ist, dass der Anpressdruck der wenigstens einen Dichtungslippe (12,16) einstellbar ist.

2. Dichtungsleiste nach Anspruch 1, **dadurch gekennzeichnet, dass** wenigstens eines der Formteile (1,2) mit einer zu beschichtenden oder in sonstiger Weise zu bearbeitenden Funktionsfläche versehen ist.

3. Dichtungsleiste nach Anspruch 1 oder 2, **dadurch gekennzeichnet, dass** der Raum (4) unter Anpassung an die Bewegungskurve der Scheibe (17) zwischen einer vollständigen Öffnungsstellung und einer völligen Schließstellung ausgehend von dessen einem Ende (8) bis zu dessen anderem Ende (9) ein sich änderndes Tiefenmaß (7) aufweist.

4. Dichtungsleiste nach einem der Ansprüche 1 bis 3, **dadurch gekennzeichnet, dass** zumindest eines der beiden Formteile (1,2) eine global L-förmige Gestalt aufweist und aus einem, zur Befestigung an der Rahmenstruktur (3) bestimmten Basisteil (13) und einem sich zu diesem senkrecht erstreckenden Seitenteil (14) besteht, wobei sich das Seitenteil (14) im Wesentlichen parallel zu der Scheibe (17) bzw. dem Tiefenmaß (7) erstreckt.

5. Dichtungsleiste nach Anspruch 4, **dadurch gekennzeichnet, dass** sich das Basisteil (13) im Wesentlichen parallel zu einem Randabschnitt (6) der Rahmenstruktur (3) erstreckt und in Richtung der Pfeile (21) senkrecht zu der Oberfläche der Scheibe (17) justierbar mit dem Randabschnitt (6) in Verbindung steht.

6. Dichtungsleiste nach einem der Ansprüche 4 oder 5, **gekennzeichnet durch** wenigstens ein, zwischen der Rahmenstruktur (3) und einem der Formteile (1,2) wirksamen Dichtungsprofil (26,22) zum Dichten des Innenraumes der Dichtungsleiste gegenüber der Außenseite (24) der Rahmenstruktur (3).

7. Dichtungsleiste nach einem der vorangegangenen Ansprüche 1 bis 6, **dadurch gekennzeichnet, dass** die Formteile (1,2) aus einem Kunststoff, z.B. PPE bestehen, dass die Dichtungselemente (11,15) sowie das wenigstens eine Dichtungsprofil (26,22) aus einem Elastomer, z. B. EPDM oder TPE bestehen und jeweils als Formelemente ausgebildet sind, die im Rahmen eines Umspritzprozesses oder in sonstiger Weise mit den Formteilen (1,2) verbunden sind.

8. Dichtungsleiste nach einem der vorangegangenen Ansprüche 1 bis 6, **dadurch gekennzeichnet, dass** wenigstens eines der Formteile (1,2) aus einem metallischen Werkstoff, z.B. VA-Blech besteht, dass die Dichtungselemente (11,15) sowie das wenigstens eine Dichtungsprofil (26,22) aus einem Elastomer, z.B. EPDM oder TPE bestehen und jeweils als Formelemente ausgebildet sind, die im Rahmen eines Umspritzprozesses oder in sonstiger Weise mit den Formteilen (1,2) verbunden sind.

9. Dichtungsleiste nach einem der vorangegangenen Ansprüche 1 bis 8, **dadurch gekennzeichnet, dass** die Formteile (1,2) lösbar mit der Rahmenstruktur (3) in Verbindung stehen

10. Dichtungsleiste nach einem der vorangegangenen Ansprüche 1 bis 9, **dadurch gekennzeichnet, dass** die Formteile (1,2) nach Maßgabe der Rahmenstruktur (3) eine ausgehend von dem einen Ende (8) bis zu dem anderen Ende (9) räumlich gekrümmte Gestaltung aufweisen.

## Claims

1. Sealing strip which is arranged to be mounted on a frame structure (3) of a vehicle and is intended to co-operate with a window pane (17) which can be displaced between an open position and a closed position, having at least one sealing lip (12, 16) which on the edge-side lies against the pane (17) in a sealing manner in accordance with the displacement position of the pane, consisting of shaped parts (1, 2) which are produced separately from one another, are intended to be mounted on the frame structure (3), bear the at least one sealing lip and in the mounted condition form a space (4) which is generally U-shaped in cross-section and is arranged to receive the pane (17), **characterised in that** in the mounted condition the shaped parts (1, 2) are connected to each other only via the frame structure (3) but are not connected directly to each other, and **in that** at least one of the two shaped parts (1, 2) is attached to the frame structure (3) so as to be adjustable in a direction (21) perpendicular to the surface of the pane (17) with the proviso that the contact pressure of the at least one sealing lip (12, 16) can be adjusted.

2. Sealing strip as claimed in Claim 1, **characterised in that** at least one of the shaped parts (1, 2) is provided with a functional surface which is to be coated or is to be treated in another manner.

3. Sealing strip as claimed in Claim 1 or 2, **characterised in that** the space (4) has a depth measurement (7) which varies starting from one end (8) thereof to the other end (9) thereof so as to be adapted to the movement curve of the pane (17) between a completely open position and a completely closed position.

4. Sealing strip as claimed in any one of Claims 1 to 3, **characterised in that** at least one of the two shaped parts (1, 2) has a generally L-shaped configuration and consists of a base part (13) which is intended to be attached to the frame structure (3) and a side part (14) which extends perpendicularly with respect to the base part, wherein the side part (14) extends substantially in parallel with the pane (17) or depth measurement (7).

5. Sealing strip as claimed in Claim 4, **characterised in that** the base part (13) extends substantially in parallel with an edge portion (6) of the frame structure (3) and is connected to the edge portion (6) so as to be adjustable in the direction of the arrows (21) perpendicular to the surface of the pane (17).

6. Sealing strip as claimed in any one of Claims 4 or 5, **characterised by** at least one sealing profile (26, 22) which acts between the frame structure (3) and one of the shaped parts (1, 2) and is used to seal the inner space of the sealing strip with respect to the outer side (24) of the frame structure (3).

7. Sealing strip as claimed in any one of the preceding Claims 1 to 6, **characterised in that** the shaped parts (1, 2) consist of a synthetic material, e.g., PPE, **in that** the sealing elements (11,15) and the at least one sealing profile (26, 22) consist of an elastomer, e.g., EPDM or TPE, and are each formed as shaped elements which are connected to the shaped parts (1, 2) as part of an injection-moulding process or in another manner.

8. Sealing strip as claimed in any one of the preceding Claims I to 6, **characterised in that** at least one of the shaped parts (1, 2) consists of a metallic material, e.g., VA sheet metal, **in that** the sealing elements (11, 15) and the at least one sealing profile (26, 22) consist of an elastomer, e.g., EPDM or TPE, and are each formed as shaped elements which are connected to the shaped parts (1, 2) as part of an injection-moulding process or in another manner.

9. Sealing strip as claimed in any one of the preceding Claims 1 to 8, **characterised in that** the shaped parts (1, 2) are releasably connected to the frame structure (3).

10. Sealing strip as claimed in any one of the preceding Claims 1 to 9, **characterised in that** the shaped parts (1, 2) have a spatially curved configuration starting from one end (8) to the other end (9) in accordance with the frame structure (3).

## Revendications

1. Baguette d'étanchéité, adaptée pour être montée sur une structure de châssis (3) d'un véhicule, ladite baguette étant destinée à coopérer avec une vitre (17) d'une fenêtre pivotante entre une position d'ouverture et de fermeture, avec au moins une lèvre d'étanchéité (12, 16) qui, en fonction de la position de pivotement de la vitre (17), s'applique du côté bord contre celle-ci avec un effet d'étanchéité, ladite baguette étant composée de pièces mises en forme (1, 2) fabriquées séparément l'une de l'autre, destinées au montage sur la structure de châssis (3), portant ladite au moins une lèvre d'étanchéité et formant à l'état monté un espace (4) de section transversale globalement en forme de U et aménagé pour recevoir la vitre (17), **caractérisée en ce qu'**à l'état monté, les pièces moulées (1, 2) sont reliées uniquement par l'intermédiaire de la structure de châssis (3), mais pas directement entre elles, et **en ce qu'**au moins l'une des deux pièces mises en forme (1, 2) est fixée à la structure de châssis de façon ajustable dans une direction (21) perpendiculaire à la surface de la vitre (17) avec la condition que la pression de contact de ladite au moins une lèvre d'étanchéité (12, 16) soit ajustable.

2. Baguette d'étanchéité selon la revendication 1, **caractérisée en ce qu'**au moins l'une des pièces mises en forme (1, 2) est munie d'une surface fonctionnelle à revêtir ou à traiter d'une autre façon.

3. Baguette d'étanchéité salon la revendication 1 ou 2, **caractérisée en ce que** l'espace (4), en s'adaptant à la courbe de mouvement de la vitre (17) entre une position d'ouverture complète et une position de fermeture complète, présente une cote de profondeur (7) variable en partant d'une de ses extrémités (8) jusqu'à son autre extrémité (9).

4. Baguette d'étanchéité selon l'une quelconque des revendications 1 à 3, **caractérisée en ce qu'**au moins l'une des deux pièces mises en forme (1, 2) présente une forme globalement en forme de L et se compose d'une partie de base (13) destinée à être fixée à la structure de châssis (3) et d'une partie latérale (14) s'étendant perpendiculairement à celle-ci, la partie latérale (14) s'étendant substantiellement en parallèle à la vitre (17) ou à la cote de profondeur (7).

5. Baguette d'étanchéité selon la revendication 4, **caractérisée en ce que** la partie de base (13) s'étend substantiellement parallèlement à une portion périphérique (6) de la structure de châssis (3) et est reliée à la portion périphérique (6) de façon ajustable en direction des flèches (21), perpendiculairement à la surface de la vitre (17).

6. Baguette d'étanchéité selon l'une quelconque des revendications 4 ou 5, **caractérisée par** au moins un profilé d'étanchéité (26, 22) agissant entre la structure de châssis (3) et l'une des pièces mises en forme (1, 2), pour rendre étanche l'intérieur de la baguette d'étanchéité par rapport à l'extérieur (24) de la structure de châssis (3).

7. Baguette d'étanchéité selon l'une quelconque des revendications précédentes 1 à 6, **caractérisée en ce que** les pièces mises en forme (1, 2) sont composées de matière plastique, par exemple de PPE, **en ce que** les éléments d'étanchéité (11, 15) ainsi que l'au moins un profilé d'étanchéité (26, 22) sont composés d'un élastomère, par exemple d'EPDM ou de TPE, et sont respectivement réalisés comme des éléments qui sont reliés aux pièces mises en forme (1, 2) dans le cadre d'un processus de surmoulage ou autrement.

8. Baguette d'étanchéité selon l'une quelconque des revendications précédentes 1 à 6, **caractérisée en ce qu'**au moins une des pièces mises en forme (1, 2) se compose d'un matériau métallique, par exemple d'une tôle VA, **en ce que** les éléments d'étanchéité (11, 15) ainsi que ledit au moins un profilé d'étanchéité (26, 22) se composent d'un élastomère, par exemple d'EPDM ou de TPE, et sont respectivement réalisés comme des éléments moulés qui sont reliés aux pièces mises en forme (1, 2) dans le cadre d'un processus de surmoulage ou autrement.

9. Baguette d'étanchéité selon l'une quelconque des revendications précédentes 1 à 8, **caractérisée en ce que** les pièces mises en forme (1, 2) sont reliées à la structure de châssis (3) de façon amovible.

10. Baguette d'étanchéité selon l'une quelconque des revendications précédentes 1 à 9, **caractérisée en ce que** les pièces mises en forme (1, 2) présentent en fonction de la structure de châssis (3) entre une extrémité (8) et l'autre extrémité (9) une configuration courbée dans l'espace.
